# EUROPEAN PATENT SPECIFICATION

(11) **EP 4 503 324 B1**
(45) Date of publication and mention of the grant of the patent: **26.08.2026**
(21) Application number: 22950747.0
(22) Date of filing: 15.07.2022
(51) Int. Cl.: H01M 50/15, H01M 50/176, H01M 50/188, H01M 50/249, H01M 50/55, H01M 50/593, H01M 50/103

(54) **END COVER ASSEMBLY, BATTERY CELL, BATTERY, AND ELECTRIC DEVICE**
ENDKAPPENANORDNUNG, BATTERIEZELLE, BATTERIE UND ELEKTRISCHE VORRICHTUNG
ENSEMBLE COUVERCLE D'EXTRÉMITÉ, ÉLÉMENT DE BATTERIE, BATTERIE ET DISPOSITIF ÉLECTRIQUE

(43) Date of publication of application: 05.02.2025
(73) Proprietor: Contemporary Amperex Technology (Hong Kong) Limited, Hong Kong (HK)
(72) Inventor: ZHOU, Wenlin, Ningde, Fujian 352100 (CN); LI, Quankun, Ningde, Fujian 352100 (CN); XIE, Yongfeng, Ningde, Fujian 352100 (CN); LIU, Wenzhong, Ningde, Fujian 352100 (CN); WANG, Peng, Ningde, Fujian 352100 (CN)
(74) Representative: Gong, Jinping
(86) International application number: PCT/CN2022/106099
(87) International publication number: WO 2024/011629

(56) References cited:
- CN-A- 107 658 395
- CN-A- 107 658 395
- CN-U- 202 651 222
- CN-U- 202 651 222
- CN-U- 210 167 389
- CN-U- 210 167 389
- CN-U- 216 120 664
- CN-U- 216 903 143
- CN-U- 216 903 261
- JP-A- 2001 135 357
- US-A1- 2012 264 007

## Description

### Technical Field

The present application relates to the field of batteries, in particular to an end cover assembly, a battery cell, a battery, and an electrical device.

### Background Art

Batteries are widely used in the field of new energy, such as electric vehicles and new energy vehicles, which have become a new trend in the development of the automotive industry. The development of battery technology needs to consider various design factors simultaneously, such as energy density, cycle life, discharge capacity, charge and discharge rate, and other performance parameters. In addition, safety of batteries should also be considered. However, in existing technologies, the safety of batteries is poor, and fire or explosion accidents occur sometimes.
CN216903261U describes an end cover assembly comprising an end cover, an electrode terminal, a sealing piece, a connecting piece, a first insulating piece and a first flow guide channel. CN202651222U describes a cover plate assembly comprising a cover plate body, an insulated sealing member and an electrode terminal.
CN210167389U describes a secondary battery top cover, comprising a top cover piece, a pole, and an upper insulating member.
CN107658395A describes a lithium ion battery comprising a pole group, a cover plate, a shell, and post terminals.
US20120264007A describes a battery comprising a battery container containing a power generating element; a lid plate covering a top opening of the battery container; and an external terminal.

### Summary

The present application provides an end cover assembly as defined in claims 1 to 8, a battery cell as defined in claim 9, a battery as defined in claim 10, and an electrical device as defined in claim 11, in order to solve problems in related technologies that safety of batteries is poor and fire or explosion accidents occur sometimes.

In a first aspect, an embodiment of the present application provides an end cover assembly used for a battery cell, the battery cell including a shell, where the end cover assembly includes an end cover, an electrode terminal, and an insulating member; the end cover is used for closing an opening of the shell, and the end cover has a mounting portion that confines a mounting hole; the electrode terminal at least partially passes through the mounting hole; and the insulating member includes a first insulating portion, a second insulating portion, and a third insulating portion connected sequentially, the second insulating portion is at least partially located in the mounting hole, and the first insulating portion and the third insulating portion are separately located on two sides of the mounting portion in a thickness direction of the end cover to cover the mounting portion.

In the foregoing technical solution, the insulating member of the end cover assembly extends into the mounting hole from one side of the mounting portion in the thickness direction of the end cover and extends out of the mounting hole from the other side of the end cover in the thickness direction to cover the mounting portion, and the second insulating portion covers an inner wall of the mounting hole, so that the inner wall of the mounting hole is insulated from the electrode terminal to avoid a short circuit caused by contact between the electrode terminal and the inner wall of the mounting hole, and problems of fire or explosion accidents occurring in a battery cell are alleviated to some extent.

In the first aspect of the present application, the end cover assembly further includes a connector located on a side, away from the shell, of the end cover, the connector is connected to the electrode terminal, and the connector is used for outputting electrical energy of the battery cell, where in the thickness direction, the first insulating portion is at least partially located between the connector and the end cover to insulate the connector and the end cover.

In the foregoing technical solution, the connector is connected to the electrode terminal to limit the electrode terminal, and the connector can abut against the first insulating portion to prevent the electrode terminal from detaching from the mounting hole away from the connector in the thickness direction. On the other hand, the connector can conveniently output the electrical energy of the battery cell. The first insulating portion is at least partially located between the connector and the end cover, which can insulate the connector and the end cover to avoid a short circuit caused by contact between the connector and the end cover, so as to alleviate the problems of fire or explosion accidents in the battery cell to some extent.

In the first aspect of the present application, the end cover further includes a connecting portion, the connecting portion surrounds the mounting portion, the connecting portion and the mounting portion jointly confine an accommodating gap, and the third insulating portion is at least partially accommodated in the accommodating gap.

In the foregoing technical solution, the third insulating portion is at least partially disposed in the accommodating gap confined by the connecting portion and the mounting portion, which can reduce the height of a side, protruding from the end cover towards the shell, of the third insulating portion, reduce occupation of the internal space of the battery cell by the third insulating portion, and increase the energy density of the battery cell.

As an optional technical solution of the embodiments of the present application, the connecting portion has a first surface away from the connector, and the third insulating portion does not protrude from the first surface in a direction away from the connector.

In the foregoing technical solution, the third insulating portion does not protrude from the first surface in a direction away from the connector, which prevents the third insulating portion from occupying the internal space of the battery cell and is beneficial to increasing the energy density of the battery cell.

As an optional technical solution of the embodiments of the present application, in the thickness direction, the third insulating portion has a second surface away from the connector, and the second surface is flush with the first surface.

In the foregoing technical solution, since the first surface is flush with the second surface, the accommodating gap exactly accommodates the third insulating portion, and the accommodating gap is not required to be too deep. In this case, the connecting portion is also relatively thin, which is conducive to increasing the energy density of the battery cell.

In the first aspect of the present application, the electrode terminal includes a main body and a limit portion, the limit portion surrounds the main body, the main body is at least partially located in the mounting hole, and in the thickness direction, the limit portion is opposite to the connecting portion; and the end cover assembly further includes a first sealing member, and the first sealing member is at least partially sealed between the connecting portion and the limit portion.

In the foregoing technical solution, the main body passes through the mounting hole, the limit portion is connected to the main body, and the limit portion can abut against the first sealing member to limit the main body from detaching from the mounting hole towards the connector in the thickness direction. The small gap between the third insulating portion and the connecting portion may cause an electrolytic solution to seep out of the battery cell or other impurities to seep into the battery cell. Therefore, the first sealing member is at least partially sealed between the connecting portion and the limit portion to seal the connecting portion and the limit portion. While the connecting portion and the limit portion are sealed, the third insulating portion and the connecting portion are also sealed to reduce the risk of leakage of the electrolytic solution from the battery cell or entry of other impurities into the battery cell.

In the first aspect of the present application, the first sealing member includes a first sealing portion and a second sealing portion, the first sealing portion is sealed between the connecting portion and the limit portion, and the second sealing portion is sealed between the main body and the second insulating portion.

In the foregoing technical solution, the first sealing portion can seal the connecting portion and the limit portion, to prevent the electrolytic solution from leaking between the connecting portion and the limit portion or other impurities from entering the battery cell from between the connecting portion and the limit portion. Further, the second sealing portion can seal the main body and the second insulating portion, to prevent other impurities from entering the battery cell from between the main body and the second insulating portion. In addition, even if the sealing of the first sealing portion partially fails and the electrolytic solution enters accordingly between the main body and the second insulating portion, the second sealing portion can still seal the main body and the second insulating portion, so as to prevent leakage of the electrolytic solution.

In the first aspect of the present application, the second sealing portion abuts against the connector.

In the foregoing technical solution, the second sealing portion abuts against the connector, which can reduce the risk of other impurities entering between the main body and the second insulating portion and improve the safety of the battery cell.

As an optional technical solution of the embodiments of the present application, the first sealing member comprises a sealant, a sealing gasket, or a sealing sheet.

As an optional technical solution of the embodiments of the present application, the second sealing portion comprises a cylindrical structure, wherein the second sealing portion is sleeved on an outer side of the main body.

As an optional technical solution of the embodiments of the present application, the first sealing portion comprises a circular structure, wherein the first sealing portion is connected to an outer circumference of the second sealing portion, and the first sealing portion and the second sealing portion form a flange shape as a whole.

As an optional technical solution of the embodiments of the present application, the end cover assembly further includes a second sealing member, and the second sealing member is at least partially sealed between the electrode terminal and the second insulating portion.

In the foregoing technical solution, the gap between the electrode terminal and the second insulating portion may cause the electrolytic solution to seep out of the battery cell or other impurities to seep into the battery cell. Therefore, the second sealing member is at least partially sealed between the electrode terminal and the second insulating portion, which can seal the electrode terminal and the second insulating portion, thereby reducing the risk of leakage of the electrolytic solution from the battery cell or entry of other impurities into the battery cell.

As an optional technical solution of the embodiments of the present application, the end cover assembly further includes a connector located on a side, away from the shell, of the end cover, the connector is connected to the electrode terminal, and the connector is used for outputting electrical energy of the battery cell; the end cover further includes a connecting portion, and the connecting portion surrounds the mounting portion; and the second sealing member includes a third sealing portion and a fourth sealing portion, the third sealing portion is sealed between the electrode terminal and the second insulating portion, and the fourth sealing portion is sealed between the connector and the connecting portion.

In the foregoing technical solution, the connector is connected to the electrode terminal to limit the electrode terminal, and the connector can abut against the fourth sealing portion to prevent the electrode terminal from detaching from the mounting hole away from the connector in the thickness direction. On the other hand, the connector can conveniently output the electrical energy of the battery cell. The third sealing portion can seal the electrode terminal and the second insulating portion, to prevent the electrolytic solution from leaking between the electrode terminal and the second insulating portion. Further, the small gap between the third insulating portion and the connecting portion may cause other impurities to enter the battery cell from between the third insulating portion and the connecting portion. The fourth sealing portion can seal the connector and the connecting portion. While the connecting portion and the connector are sealed, the third insulating portion and the connecting portion are also sealed to prevent other impurities from entering the battery cell. In addition, even if the sealing of the fourth sealing portion partially fails and other impurities enter accordingly between the main body and the second insulating portion, the third insulating portion can still seal the main body and the second insulating portion to prevent other impurities from entering the battery cell.

In a second aspect, an embodiment of the present application further provides a battery cell, which includes an electrode assembly, a shell, and the foregoing end cover assembly, where the shell has an accommodating space with an opening at one end for accommodating the electrode assembly; and the end cover is connected to the shell and closes the opening, and the electrode terminal is electrically connected to the electrode assembly.

In a third aspect, an embodiment of the present application further provides a battery, which includes a box and the foregoing battery cell, where the battery cell is accommodated in the box.

In a fourth aspect, an embodiment of the present application further provides an electrical device, which includes the foregoing battery.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art within the scope as defined in the appended claims.
FIG. 1 is a schematic structural diagram of a vehicle provided in some embodiments of the present application;
FIG. 2 is an exploded view of a battery provided in some embodiments of the present application;
FIG. 3 is an exploded structural diagram of a battery cell provided in some embodiments of the present application;
FIG. 4 is a schematic structural diagram of an end cover assembly provided in some embodiments of the present application;
FIG. 5 is a top view of an end cover provided in some embodiments of the present application;
FIG. 6 is a cross-sectional view of position A-A in FIG. 5;
FIG. 7 is an enlarged view of position B in FIG. 6;
FIG. 8 is a top view of the end cover assembly provided in some embodiments of the present application;
FIG. 9 is a cross-sectional view of position D-D in FIG. 8;
FIG. 10 is an enlarged view of position E in FIG. 9;
FIG. 11 is a top view of the end cover assembly provided in other embodiments of the present application;
FIG. 12 is a cross-sectional view of position F-F in FIG. 11;
FIG. 13 is an enlarged view of position G in FIG. 12;
FIG. 14 is a top view of the end cover provided in other embodiments of the present application;
FIG. 15 is a cross-sectional view of position H-H in FIG. 14;
FIG. 16 is an enlarged view of position I in FIG. 15;
FIG. 17 is a top view of the end cover assembly provided in other embodiments of the present application;
FIG. 18 is a cross-sectional view of position J-J in FIG. 17; and
FIG. 19 is an enlarged view of position K in FIG. 18.

Reference numerals: 10 - box; 11 - first portion; 12 - second portion; 20 - battery cell; 21 - end cover assembly; 211 - end cover; 2111 - mounting hole; 2112 - mounting portion; 2113 - connecting portion; 2114 - accommodating gap; 212 - electrode terminal; 2121 - main body; 2122 - limit portion; 213 - insulating member; 2131 - first insulating portion; 2132 - second insulating portion; 2133 - third insulating portion; 214 - connector; 215 - first sealing member; 2151 - first sealing portion; 2152 - second sealing portion; 216 - second sealing member; 2161 - third sealing portion; 2162 - fourth sealing portion; 22 - electrode assembly; 23 - shell; 100 - battery; 200 - controller; 300 - motor; 1000 - vehicle.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application.

Unless otherwise defined, all technical and scientific terms used in the present application have the same meanings as those commonly understood by technical personnel in the technical field of the present application; and the terms "include" and "have" in the description and claims of the present application, the accompanying drawings, and any variations thereof, are intended to cover non-exclusive inclusion. The terms "first", "second", and the like in the description and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment is included in at least one embodiment of the present application. The phrase at various locations in the description does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The battery cell includes an electrode assembly and an electrolytic solution, and the electrode assembly is composed of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like. Moreover, the electrode assembly may be of a wound structure or a laminated structure, and the embodiments of the present application are not limited thereto.

The development of battery technology needs to consider various design factors simultaneously, such as energy density, cycle life, discharge capacity, charge and discharge rate, and other performance parameters. In addition, safety of batteries should also be considered. However, in existing technologies, the safety of batteries is poor, and fire or explosion accidents occur sometimes.

The inventor further studied and found that the electrical energy of a battery cell is output or input through an electrode terminal disposed on an end cover, which needs to be insulated from the electrode terminal to avoid a short circuit caused by contact between the electrode terminal and the end cover. However, in existing technologies, the poor effect of insulating the electrode terminal and the end cover leads to the contact between the electrode terminal and the end cover to cause a short circuit, so that a fire or explosion accident occurs in the battery cell.

In view of this, an embodiment of the present application provides an end cover assembly. The end cover assembly includes an end cover, an electrode terminal, and an insulating member. The end cover has a mounting portion, which confines a mounting hole. The electrode terminal at least partially passes through the mounting hole. The insulating member includes a first insulating portion, a second insulating portion, and a third insulation part connected sequentially, the second insulating portion is at least partially located in the mounting hole, and the first insulating portion and the third insulating portion are separately located on two sides of the mounting portion in a thickness direction of the end cover to cover the mounting portion.

The insulating member of the end cover assembly extends into the mounting hole from one side of the mounting portion in the thickness direction of the end cover and extends out of the mounting hole from the other side of the end cover in the thickness direction to cover the mounting portion, and the second insulating portion covers an inner wall of the mounting hole, so that the inner wall of the mounting hole is insulated from the electrode terminal to avoid a short circuit caused by contact between the electrode terminal and the inner wall of the mounting hole, and problems of fire or explosion accidents occurring in a battery cell are alleviated to some extent.

The technical solutions described in the embodiments of the present application are applicable to batteries and electrical devices using batteries.

The electrical device may be a vehicle, a mobile phone, a portable device, a notebook computer, a ship, a spacecraft, an electric toy, an electric tool, or the like. The spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electrical devices.

For convenient description, the following embodiments are described by an example of a vehicle 1000 as an electrical device.

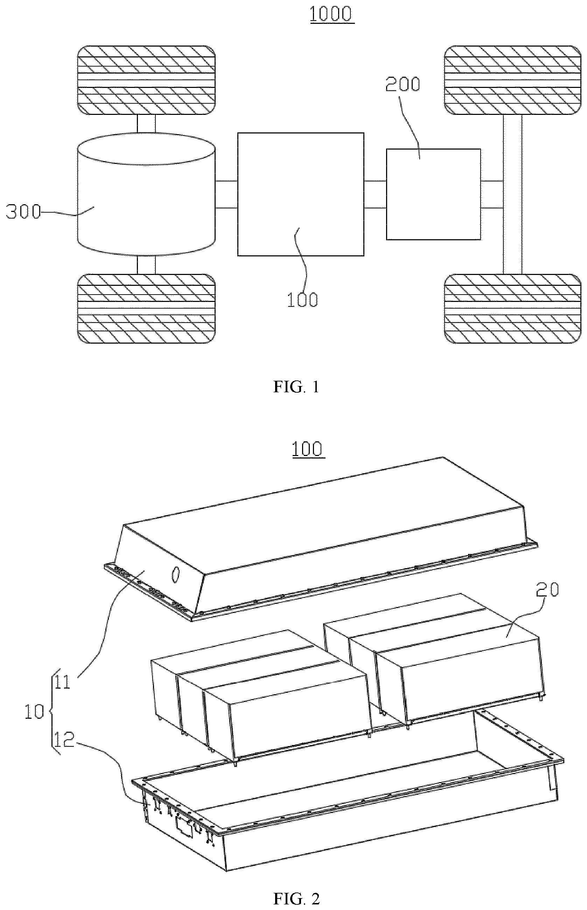

Referring to FIG. 1, FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery 100 provided in some embodiments of the present application. The battery 100 includes a box 10 and battery cells 20, where the battery cells 20 are accommodated in the box 10. The box 10 is used for providing an accommodating space for the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12. Of course, the box 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery cell or a primary battery cell, or may be a lithium-sulfur battery cell, a sodium-ion battery cell, or a magnesium-ion battery cell, but is not limited to this. The battery cell 20 may be cylindrical, flat, cuboid, or in other shapes.

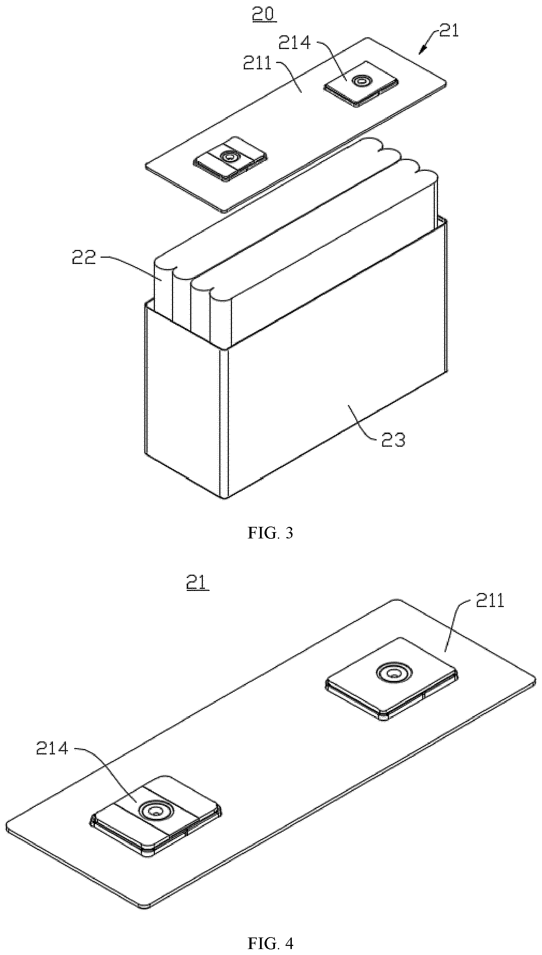

Referring to FIG. 3, FIG. 3 is an exploded structural diagram of a battery cell 20 provided in some embodiments of the present application. The battery cell 20 refers to a minimum unit that constitutes the battery 100. As shown in FIG. 3, the battery cell 20 includes an end cover assembly 21, an electrode assembly 22, and a shell 23.

The end cover assembly 21 includes an end cover 211, an electrode terminal 212, and an insulating member 213. The end cover 211 refers to a component that is closed to an opening of the shell 23 to isolate an internal environment of the battery cell 20 from an external environment. Unlimitedly, a shape of the end cover 211 may adapt to that of the shell 23 to fit the shell 23. Optionally, the end cover 211 may be made of a material with certain hardness and strength (such as aluminum alloy). In this case, the end cover 211 is less prone to deformation during extrusion and deformation, so that the battery cell 20 can have higher structural strength and its safety can be improved. A material of the end cover 211 may be various, such as copper, iron, aluminum, stainless steel, aluminum alloy, or plastic, and is not specially limited in the embodiments of the present application. The electrode terminal 212 is disposed on the end cover 211. The electrode terminal 212 may be used for electrical connection with the electrode assembly 22 to output or input electrical energy of the battery cell 20. In some embodiments, the end cover assembly 21 further includes a pressure relief mechanism (not shown), which is disposed on the end cover 211 and used for opening when the internal pressure or temperature of the battery cell 20 reaches a detonation pressure to release the internal pressure of the battery cell 20.

The shell 23 is a component fitting the end cover 211 to form an internal environment of the battery cell 20, where the formed internal environment may be used for accommodating the electrode assembly 22, an electrolytic solution, and other components. The shell 23 and the end cover 211 may be independent components, the shell 23 may be provided with an opening, and the cover body 211 is closed to the opening to form the internal environment of the battery cell 20. Unlimitedly, the end cover 211 and the shell 23 may be integrated. Specifically, the end cover 211 and the shell 23 may form a common connection surface before other components are put into the shell. When the interior of the shell 23 is to be encapsulated, the end cover 211 is closed to the shell 23. The shell body 23 may be in various shapes and sizes, such as cuboid, cylinder, or hexagonal prism. Specifically, the shape of the shell body 23 may be determined according to a specific shape and size of the electrode assembly 22. A material of the shell body 23 may be various, such as copper, iron, aluminum, stainless steel, aluminum alloy, or plastic, and is not specially limited in the embodiments of the present application.

The electrode assembly 22 is a component that undergoes electrochemical reactions in the battery cell 20. The shell 23 may contain one or more electrode assemblies 22. The electrode assembly 22 is mainly formed by winding or laminating a positive electrode sheet and a negative electrode sheet, and a separator is usually disposed between the positive electrode sheet and the negative electrode sheet. Portions of the positive electrode sheet and the negative electrode sheet that contain active materials constitute a body portion of the electrode assembly 22, while portions of the positive electrode sheet and the negative electrode sheet that do not contain active materials constitute respective tabs. The positive electrode tab and the negative electrode tab may be located at one end of the body portion or at two ends of the body portion separately. In charging and discharging processes of the battery 100, positive and negative electrode active materials react with the electrolytic solution, and the tabs are connected to the electrode terminals 212 to form a current circuit.

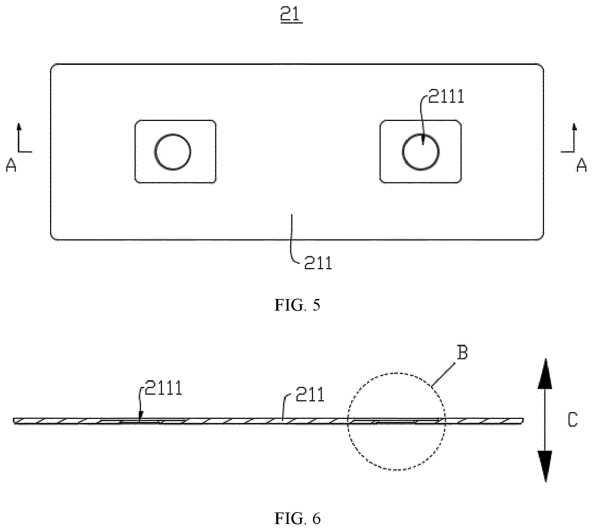

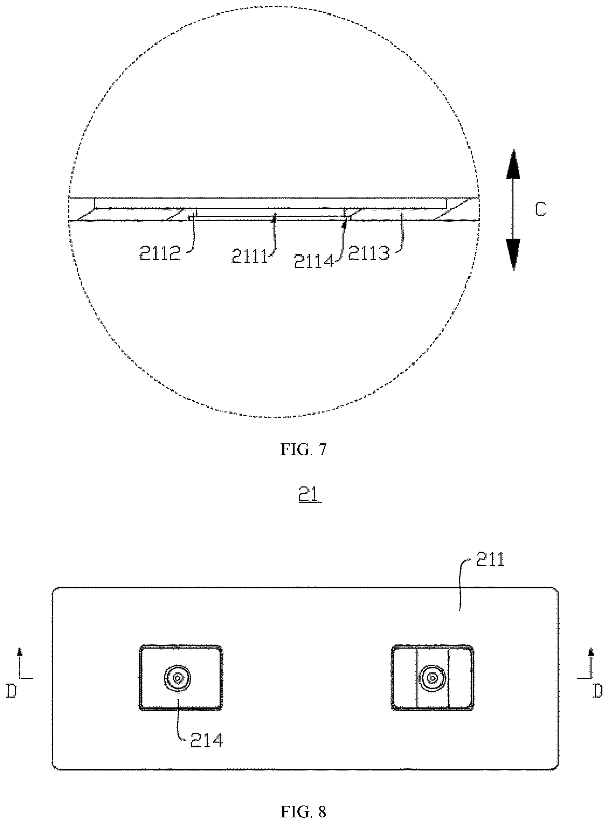

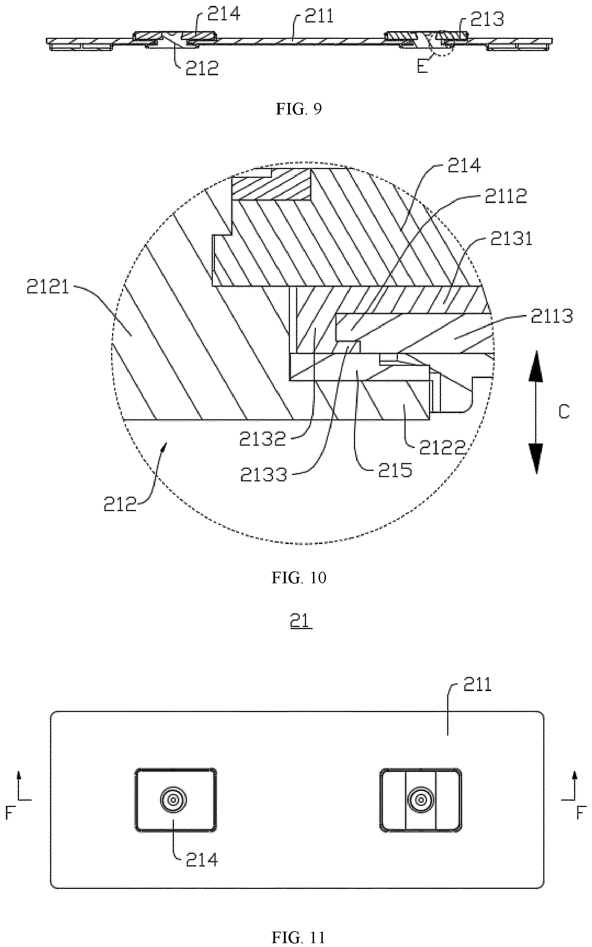

Referring to FIGs. 4, 5, 6, 7, 8, 9, and 10, FIG. 4 is a schematic structural diagram of an end cover assembly 21 provided in some embodiments of the present application. FIG. 5 is a top view of an end cover 211 provided in some embodiments of the present application. FIG. 6 is a cross-sectional view of position A-A in FIG. 5. FIG. 7 is an enlarged view of position B in FIG. 6. FIG. 8 is a top view of the end cover assembly 21 provided in some embodiments of the present application. FIG. 9 is a cross-sectional view of position D-D in FIG. 8. FIG. 10 is an enlarged view of position E in FIG. 9. An embodiment of the present application provides an end cover assembly 21. The end cover assembly 21 includes an end cover 211, an electrode terminal 212, and an insulating member 213. The end cover 211 is used for closing the opening of the shell 23. The end cover 211 has a mounting portion 2112, and the mounting portion 2112 confines a mounting hole 2111. The electrode terminal 212 at least partially passes through the mounting hole 2111. The insulating member 213 includes a first insulating portion 2131, a second insulating portion 2132, and a third insulating portion 2133 connected sequentially, the second insulating portion 2132 is at least partially located in the mounting hole 2111, and the first insulating portion 2131 and the third insulating portion 2133 are separately located on two sides of the mounting portion 2112 in a thickness direction of the end cover 211 to cover the mounting portion 2112.

The thickness direction is indicated by a double-headed arrow C in FIG. 7 or FIG. 10.

The mounting portion 2112 is a portion of the end cover 211 that forms the mounting hole 2111. Taking the end cover 211 of a plate-like structure as an example, the mounting portion 2112 is a portion of the end cover 211 that surrounds the mounting hole 2111. The mounting hole 2111 is used for mounting the electrode terminal 212, so that the electrode terminal 212 can be electrically connected to the electrode assembly 22 and an electrical device.

"The electrode terminal 212 at least partially passes through the mounting hole 2111" indicates that the electrode terminal 212 may be either only partially accommodated in the mounting hole 2111 or fully accommodated in the mounting hole 2111.

The insulating member 213 is made of a material with insulating properties, such as plastic or rubber. The first insulating portion 2131, the second insulating portion 2132, and the third insulating portion 2133 are three sequentially connected portions of the insulating member 213. The first insulating portion 2131 is located on one side of the mounting portion 2112 in the thickness direction of the end cover 211. The first insulating portion 2131 and the second insulating portion 2132 are arranged at an angle, so that the second insulating portion 2132 extends into the mounting hole 2111. The second insulating portion 2132 and the third insulating portion 2133 are arranged at an angle, so that the third insulating portion 2133 extends to the other side of the mounting portion 2112 in the thickness direction. In this case, the insulating member 213 covers the mounting portion 2112, and the second insulating portion 2132 covers an inner wall of the mounting hole 2111, so that the electrode terminal 212 cannot be in contact with an inner wall of the mounting hole 2111, and the electrode terminal 212 is insulated from the end cover 211.

The insulating member 213 of the end cover assembly 21 extends into the mounting hole 2111 from one side of the mounting portion 2112 in the thickness direction of the end cover 211 and extends out of the mounting hole 2111 from the other side of the mounting portion 2112 in the thickness direction of the end cover 211 to cover the mounting portion 2112, and the second insulating portion 2132 covers the inner wall of the mounting hole 2111, so that the inner wall of the mounting hole 2111 is insulated from the electrode terminal 212 to avoid a short circuit caused by contact between electrode terminal 212 and the inner wall of mounting hole 2111, and problems of fire or explosion accidents occurring in a battery cell 20 are alleviated to some extent.

In some embodiments, the end cover assembly 21 further includes a connector 214, and the connector 214 is located on a side, away from the shell 23, of the end cover 211. The connector 214 is connected to the electrode terminal 212, and the connector 214 is used for outputting the electrical energy of the battery cell 20. In the thickness direction, the first insulating portion 2131 is at least partially located between the connector 214 and the end cover 211 to insulate the connector 214 and the end cover 211.

The connector 214 is a component connected to an end, away from the shell 23 in the thickness direction, of the electrode terminal 212. The connector 214 is made of a conductive material and has conductivity. For example, the connector 214 may be a metal block. The connector 214 may be riveted to the electrode terminal 212 to output the electrical energy of the battery cell 20.

The first insulating portion 2131 may be partially located between the connector 214 and the end cover 211, or completely located between the connector 214 and the end cover 211. The first insulating portion 2131 insulates the connector 214 and the end cover 211 to avoid a short circuit caused by contact between the connector 214 and the end cover 211.

The connector 214 is connected to the electrode terminal 212 to limit the electrode terminal 212, and the connector 214 can abut against the first insulating portion 2131 to prevent the electrode terminal 212 from detaching from the mounting hole 2111 away from the connector 214 in the thickness direction. On the other hand, the connector 214 can conveniently output the electrical energy of the battery cell 20. The first insulating portion 2131 is at least partially located between the connector 214 and the end cover 211, which can insulate the connector 214 and the end cover 211 to avoid a short circuit caused by contact between the connector 214 and the end cover 211, so as to alleviate the problems of fire or explosion accidents in the battery cell 20 to some extent.

In some embodiments, the end cover 211 further includes a connecting portion 2113, the connecting portion 2113 surrounds the mounting portion 2112, and the connecting portion 2113 and the mounting portion 2112 jointly confine an accommodating gap 2114. The third insulating portion 2133 is at least partially accommodated in the accommodating gap 2114.

The connecting portion 2113 is a portion of the end cover 211 that is adjacent to the mounting portion 2112 and located on an outer side of the mounting portion 2112. The connecting portion 2113 has the same thickness at each position (for example, the connecting portion 2113 may be of a plate-like structure), and the thickness of the connecting portion 2113 may be greater than that of the mounting portion 2112. In this embodiment, in the thickness direction, one side of the connecting portion 2113 is flush with one side of the mounting portion 2112, and the other side of the connecting portion 2113 exceeds the other side of the mounting portion 2112. In other embodiments, in the thickness direction, one side of the connecting portion 2113 exceeds one side of the mounting portion 2112, and the other side of the connecting portion 2113 exceeds the other side of the mounting portion 2112.

The accommodating gap 2114 is an accommodating space enclosed by one side of the mounting portion 2112 in the thickness direction and a surface, near the mounting portion 2112, of the connecting portion 2113. The accommodating gap 2114 may be of a groove structure on the end cover 211.

The third insulating portion 2133 is at least partially disposed in the accommodating gap 2114 confined by the connecting portion 2113 and the mounting portion 2112, which can reduce the height of a side, protruding from the end cover 211 towards the shell 23, of the third insulating portion 2133, reduce occupation of the internal space of the battery cell 20 by the third insulating portion 2133, and increase the energy density of the battery cell 20.

In this embodiment, the accommodating gap 2114 is in communication with the mounting hole 2111, so that the third insulating portion 2133 can be directly accommodated in the accommodating gap 2114 without bypassing the mounting portion 2112.

In other embodiments, the thickness of the connecting portion 2113 is less than that of the mounting portion 2112. For example, in the thickness direction, one side of the mounting portion 2112 is flush with one side of the connecting portion 2113, and the other side of the mounting portion 2112 exceeds the other side of the connecting portion 2113. In this case, the accommodating gap 2114 is not in communication with the mounting hole 2111, and the third insulating portion 2133 needs to bypass the mounting portion 2112 and extends into the accommodating gap 2114.

With reference to FIG. 10, in some embodiments, the connecting portion 2113 has a first surface away from the connector 214, and the third insulating portion 2133 does not protrude from the first surface in a direction away from the connector 214.

"The third insulating portion 2133 does not protrude from the first surface in a direction away from the connector 214" indicates that, in the thickness direction, the distance between the surface, away from the connector 214, of the third insulating portion 2133 and the connector 214 is less than or equal to the distance between the first surface and the connector 214.

The third insulating portion 2133 does not protrude from the first surface in a direction away from the connector 214, which prevents the third insulating portion 2133 from occupying the internal space of the battery cell 20 and is beneficial to increasing the energy density of the battery cell 20.

In some embodiments, the third insulating portion 2133 has a second surface away from the connector 214 in the thickness direction. The second surface is flush with the first surface.

The second surface specifically refers to a surface, away from the connector 214, of the third insulating portion 2133 in the thickness direction. "The second surface is flush with the first surface" indicates that, in the thickness direction, the distance between the second surface and the connector 214 is equal to the distance between the first surface and the connector 214.

Since the first surface is flush with the second surface, the accommodating gap 2114 exactly accommodates the third insulating portion 2133, and the accommodating gap 2114 is not required to be too deep. In this case, the connecting portion 2113 is also relatively thin, which is conducive to increasing the energy density of the battery cell 20.

With reference to FIG. 10, in some embodiments, the electrode terminal 212 includes a main body 2121 and a limit portion 2122, and the limit portion 2122 surrounds the main body 2121. The main body 2121 is at least partially located in the mounting hole 2111. In the thickness direction, the limit portion 2122 is opposite to the connecting portion 2113. The end cover assembly 21 further includes a first sealing member 215, and the first sealing member 215 is at least partially sealed between the connecting portion 2113 and the limit portion 2122.

The main body 2121 is a main portion where the electrode terminal 212 plays its role. The main body 2121 may be partially located in the mounting hole 2111 or completely located in the mounting hole 2111.

The limit portion 2122 is connected to the main body 2121 and surrounds the main body 2121. The limit portion 2122 is used for abutting against other components to limit the position of the main body 2121, so as to prevent the main body 2121 from detaching from the mounting hole 2111. For example, the limit portion 2122 may be circular, and the inner side of the limit portion 2122 is connected to the main body 2121.

The first sealing member 215 can achieve a sealing effect, such as a sealant, a sealing gasket, or a sealing sheet.

The "sealed" refers to a setting that enables the first sealing member 215 to play its sealing role. For example, the first sealing member 215 may be in interference fit between the connecting portion 2113 and the limit portion 2122.

The main body 2121 passes through the mounting hole 2111, the limit portion 2122 is connected to the main body 2121, and the limit portion 2122 can abut against the first sealing member 215 to limit the main body 2121 from detaching from the mounting hole 2111 towards the connector 214 in the thickness direction. The small gap between the third insulating portion 2133 and the connecting portion 2113 may cause the electrolytic solution to seep out of the battery cell 20 or other impurities to seep into the battery cell 20. Therefore, the first sealing member 215 is at least partially sealed between the connecting portion 2113 and the limit portion 2122 to seal the connecting portion 2113 and the limit portion 2122. While the connecting portion 2113 and the limit portion 2122 are sealed, the third insulating portion 2133 and the connecting portion 2113 are also sealed to reduce the risk of leakage of the electrolytic solution from the battery cell 20 or entry of other impurities into the battery cell 20.

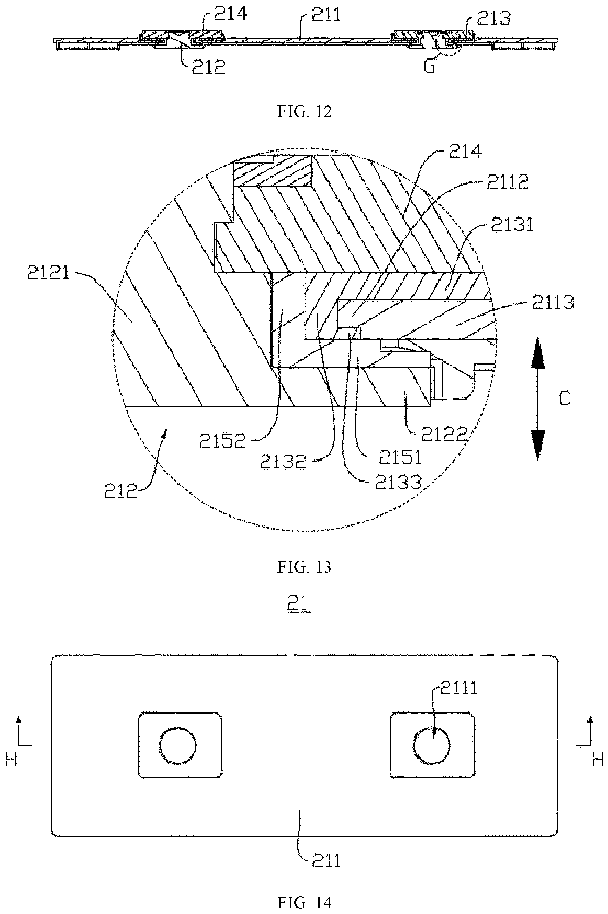

Referring to FIGs. 11, 12, and 13, FIG. 11 is a top view of the end cover assembly 21 provided in other embodiments of the present application. FIG. 12 is a cross-sectional view of position F-F in FIG. 11. FIG. 13 is an enlarged view of position G in FIG. 12. In other embodiments, the first sealing member 215 includes a first sealing portion 2151 and a second sealing portion 2152, where the first sealing portion 2151 is sealed between the connecting portion 2113 and the limit portion 2122. The second sealing portion 2152 is sealed between the main body 2121 and the second insulating portion 2132.

The first sealing portion 2151 and the second sealing portion 2152 may be directly connected together or connected together through the intermediate connecting portion. The first sealing portion 2151 is at least partially located between the connecting portion 2113 and the limit portion 2122 to seal the connecting portion 2113 and the limit portion 2122. The second sealing portion 2152 is at least partially located between the main body 2121 and the second insulating portion 2132 to seal the main body 2121 and the second insulating portion 2132.

The second sealing portion 2152 may be of a cylindrical structure, and the second sealing portion 2152 may be sleeved on an outer side of the main body 2121. The first sealing portion 2151 may be of a circular structure, and the first sealing portion 2151 is connected to an outer circumference of the second sealing portion 2152. In this case, the first sealing portion 2151 and the second sealing portion 2152 are in a flange shape as a whole.

The first sealing portion 2151 can seal the connecting portion 2113 and the limit portion 2122, to prevent the electrolytic solution from leaking between the connecting portion 2113 and the limit portion 2122 or other impurities from entering the battery cell 20 from between the connecting portion 2113 and the limit portion 2122. Further, the second sealing portion 2152 can seal the main body 2121 and the second insulating portion 2132, to prevent other impurities from entering the battery cell 20 from between the main body 2121 and the second insulating portion 2132. In addition, even if the sealing of the first sealing portion 2151 partially fails and the electrolytic solution enters accordingly between the main body 2121 and the second insulating portion 2132, the second sealing portion 2152 can still seal the main body 2121 and the second insulating portion 2132, so as to prevent leakage of the electrolytic solution.

In some embodiments, the second sealing portion 2152 abuts against the connector 214.

In the thickness direction, one end of the second sealing portion 2152 is in contact with the connector 214 and has a positive pressure that interacts with the connector 214.

The second sealing portion 2152 abuts against the connector 214, which can reduce the risk of other impurities entering between the main body 2121 and the second insulating portion 2132 and improve the safety of the battery cell 20.

In other embodiments, the first sealing member 215 is sealed between the third insulating portion 2133 and the connecting portion 2113. In this case, the first sealing member 215 can also seal the third insulating portion 2133 and the connecting portion 2113, to prevent the electrolytic solution from leaking between the third insulating portion 2133 and the connecting portion 2113 or other impurities from entering the battery cell 20 from between the third insulating portion 2133 and the connecting portion 2113.

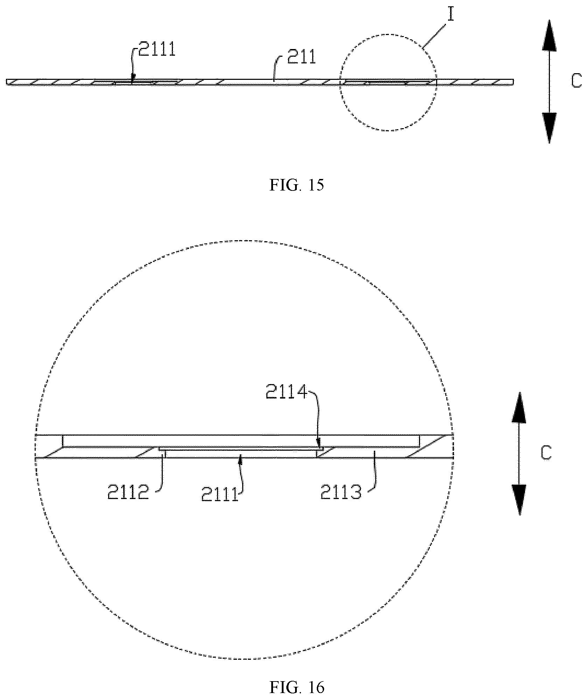

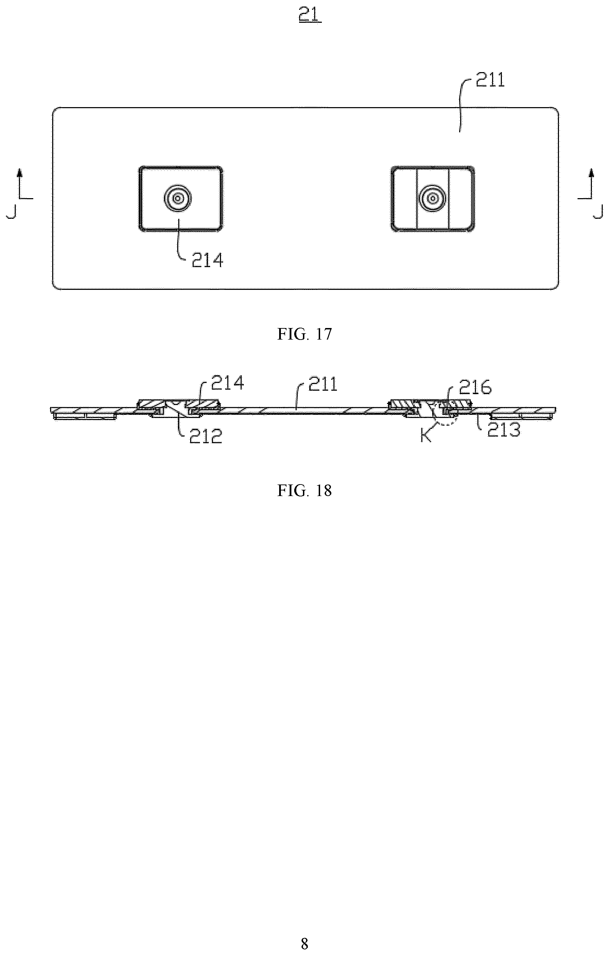

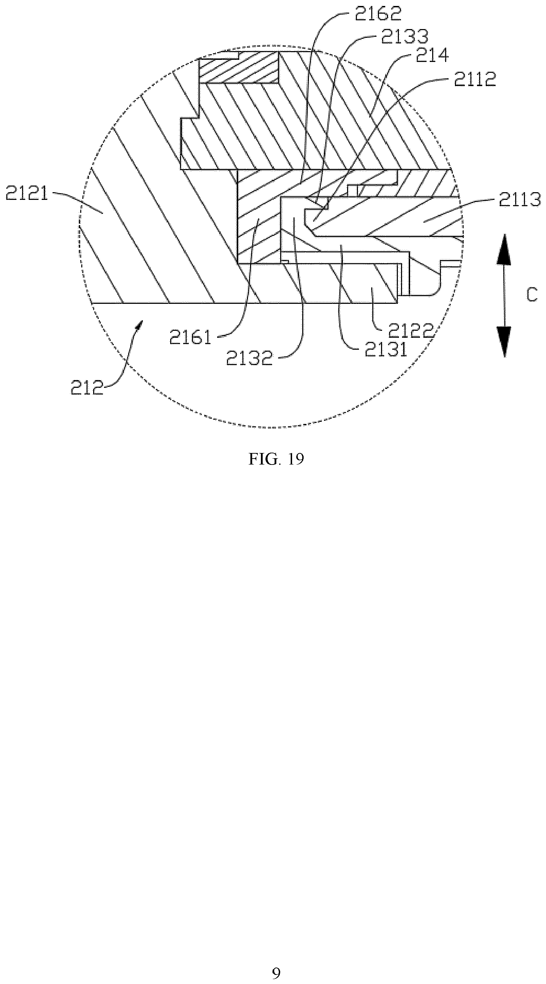

Referring to FIGs. 14, 15, 16, 17, 18, and 19, FIG. 14 is a top view of the end cover 211 provided in other embodiments of the present application. FIG. 15 is a cross-sectional view of position H-H in FIG. 14. FIG. 16 is an enlarged view of position I in FIG. 15. FIG. 17 is a top view of the end cover assembly 21 provided in other embodiments of the present application. FIG. 18 is a cross-sectional view of position J-J in FIG. 17. FIG. 19 is an enlarged view of position K in FIG. 18. In other embodiments, in the thickness direction, the first insulating portion 2131 is located on a side, facing the interior of the battery cell 20, of the end cover 211, and the first insulating portion 2131 is used for insulating the end cover 211 and the interior of the battery cell 20.

The first insulating portion 2131 is a portion of the insulating member 213 on the side, facing the interior of the battery cell 20, of the end cover 211. That is, the first insulating portion 2131 is a portion of the insulating member 213 on the side, near the electrode assembly 22, of the end cover 211.

The interior of the battery cell 20 refers to the accommodating space enclosed by the end cover 211 and the shell 23. The accommodating space is used for placing the electrode assembly 22. Therefore, facing the interior of the battery cell 20 may also be understood as facing the electrode assembly 22.

The first insulating portion 2131 is disposed on the side, facing the interior of the battery cell 20, of the end cover 211, which can insulate the end cover 211 and the components inside the battery cell 20 to avoid a short circuit caused by contact between the end cover 211 and the components inside the battery cell 20, so as to alleviate the problems of fire or explosion accidents in the battery cell 20 to some extent.

In some embodiments, the end cover 211 further includes a connecting portion 2113, the connecting portion 2113 surrounds the mounting portion 2112, and the connecting portion 2113 and the mounting portion 2112 jointly confine an accommodating gap 2114. The third insulating portion 2133 is at least partially accommodated in the accommodating gap 2114.

The connecting portion 2113 is a portion of the end cover 211 that is adjacent to the mounting portion 2112 and located on an outer side of the mounting portion 2112. The connecting portion 2113 has the same thickness at each position (for example, the connecting portion 2113 may be of a plate-like structure), and the thickness of the connecting portion 2113 may be greater than that of the mounting portion 2112. In this embodiment, in the thickness direction, one side of the connecting portion 2113 is flush with one side of the mounting portion 2112, and the other side of the connecting portion 2113 exceeds the other side of the mounting portion 2112. In other embodiments, in the thickness direction, one side of the connecting portion 2113 exceeds one side of the mounting portion 2112, and the other side of the connecting portion 2113 exceeds the other side of the mounting portion 2112.

The accommodating gap 2114 is an accommodating space enclosed by one side of the mounting portion 2112 in the thickness direction and a surface, near the mounting portion 2112, of the connecting portion 2113. The accommodating gap 2114 may be of a groove structure on the end cover 211.

The third insulating portion 2133 is at least partially disposed in the accommodating gap 2114 confined by the connecting portion 2113 and the mounting portion 2112, which can reduce the height of a side, protruding from the end cover 211 away from the shell 23, of the third insulating portion 2133, so as to reduce the risk of interference with other components.

**In** this embodiment, the accommodating gap 2114 is in communication with the mounting hole 2111, so that the third insulating portion 2133 can be directly accommodated in the accommodating gap 2114 without bypassing the mounting portion 2112.

In other embodiments, the thickness of the connecting portion 2113 is less than that of the mounting portion 2112. For example, in the thickness direction, one side of the mounting portion 2112 is flush with one side of the connecting portion 2113, and the other side of the mounting portion 2112 exceeds the other side of the connecting portion 2113. **In** this case, the accommodating gap 2114 is not in communication with the mounting hole 2111, and the third insulating portion 2133 needs to bypass the mounting portion 2112 and extends into the accommodating gap 2114.

In some embodiments, the connecting portion 2113 has a third surface away from the shell 23, and the third insulating portion 2133 does not protrude from the third surface in a direction away from the shell 23.

"The third insulating portion 2133 does not protrude from the third surface in a direction away from the shell 23" indicates that, in the thickness direction, the distance between the surface, away from the shell 23, of the third insulating portion 2133 and the shell 23 is less than or equal to the distance between the third surface and the shell 23.

The third insulating portion 2133 does not protrude from the third surface in a direction away from the shell 23, which avoids interference between the third insulating portion 2133 and other components to a certain extent and facilitates configuration of the other components.

In some embodiments, in the thickness direction, the third insulating portion 2133 has a fourth surface away from the shell 23. The fourth surface is flush with the third surface.

The fourth surface specifically refers to a surface, away from the shell 23, of the third insulating portion 2133 in the thickness direction. "The fourth surface is flush with the third surface" indicates that, in the thickness direction, the distance between the fourth surface and the shell 23 is equal to the distance between the third surface and the shell 23.

Since the third surface is flush with the fourth surface, the accommodating gap 2114 exactly accommodates the third insulating portion 2133, and the accommodating gap 2114 is not required to be too deep. In this case, the connecting portion 2113 is also relatively thin, which is conducive to increasing the energy density of the battery cell 20.

With reference to FIG. 19, in other embodiments, the end cover assembly 21 further includes a second sealing member 216, and the second sealing member 216 is at least partially sealed between the electrode terminal 212 and the second insulating portion 2132.

The second sealing member 216 can achieve a sealing effect, such as a sealant, a sealing gasket, or a sealing sheet.

The "sealed" refers to a setting that enables the second sealing member 216 to play its sealing role. For example, the second sealing member 216 may be in interference fit between the electrode terminal 212 and the second insulating portion 2132.

The gap between the electrode terminal 212 and the second insulating portion 2132 may cause the electrolytic solution to seep out of the battery cell 20 or other impurities to seep into the battery cell 20. Therefore, the second sealing member 216 is at least partially sealed between the electrode terminal 212 and the second insulating portion 2132, which can seal the electrode terminal 212 and the second insulating portion 2132, thereby reducing the risk of leakage of the electrolytic solution from the battery cell 20 or entry of other impurities into the battery cell 20.

With reference to FIG. 19, in other embodiments, the end cover assembly 21 further includes a connector 214, and the connector 214 is located on a side, away from the shell 23, of the end cover 211. The connector 214 is connected to the electrode terminal 212, and the connector 214 is used for outputting the electrical energy of the battery cell 20. The end cover 211 further includes a connecting portion 2113, and the connecting portion 2113 surrounds the mounting portion 2112. The second sealing member 216 includes a third sealing portion 2161 and a fourth sealing portion 2162, where the third sealing portion 2161 is sealed between the electrode terminal 212 and the second insulating portion 2132. The fourth sealing portion 2162 is sealed between the connector 214 and the connecting portion 2113.

The third sealing portion 2161 and the fourth sealing portion 2162 may be directly connected together or connected together through the intermediate connecting portion 2113. The third sealing portion 2161 is at least partially located between the electrode terminal 212 and the second insulating portion 2132 to seal the electrode terminal 212 and the second insulating portion 2132. The fourth sealing portion 2162 is at least partially located between the connector 214 and the connecting portion 2113 to seal the connector 214 and the connecting portion 2113.

The third sealing portion 2161 may be of a cylindrical structure, and the third sealing portion 2161 may be sleeved on an outer side of the electrode terminal 212. The fourth sealing portion 2162 may be of a circular structure, and the fourth sealing portion 2162 is connected to an outer circumference of the third sealing portion 2161. In this case, the third sealing portion 2161 and the fourth sealing portion 2162 are in a flange shape as a whole.

The connector 214 is connected to the electrode terminal 212 to limit the electrode terminal 212, and the connector 214 can abut against the fourth sealing portion 2162 to prevent the electrode terminal 212 from detaching from the mounting hole 2111 away from the connector 214 in the thickness direction. On the other hand, the connector 214 can conveniently output the electrical energy of the battery cell 20. The third sealing portion 2161 can seal the electrode terminal 212 and the second insulating portion 2132, to prevent the electrolytic solution from leaking between the electrode terminal 212 and the second insulating portion 2132. Further, the small gap between the third insulating portion 2133 and the connecting portion 2113 may cause other impurities to enter the battery cell 20 from between the third insulating portion 2133 and the connecting portion 2113. The fourth sealing portion 2162 can seal the connector 214 and the connecting portion 2113. While the connecting portion 2113 and the connector 214 are sealed, the third insulating portion 2133 and the connecting portion 2113 are also sealed to prevent other impurities from entering the battery cell 20. In addition, even if the sealing of the fourth sealing portion 2162 partially fails and other impurities enter accordingly between the main body 2121 and the second insulating portion 2132, the third insulating portion 2133 can still seal the main body 2121 and the second insulating portion 2132 to prevent other impurities from entering the battery cell 20.

An embodiment of the present application further provides a battery cell 20. The battery cell 20 includes an electrode assembly 22, a shell 23, and the foregoing end cover assembly 21. The shell 23 has an accommodating space with an opening at one end for accommodating the electrode assembly 22. The end cover 211 is connected to the shell 23 and closes the opening. The electrode terminal 212 is electrically connected to the electrode assembly 22.

An embodiment of the present application further provides a battery 100. The battery 100 includes a box 10 and the foregoing battery cell 20, and the battery cell 20 is accommodated in the box 10.

An embodiment of the present application further provides an electrical device, which includes the foregoing battery 100.

According to some embodiments of the present application, referring to FIGs. 4 to 19.

An embodiment of the present application provides an end cover assembly 21. The end cover assembly 21 is used for a battery cell 20, and the battery cell 20 includes a shell 23. The end cover assembly 21 includes an end cover 211, an electrode terminal 212, and an insulating member 213. The end cover 211 is used for closing an opening of the shell 23, the end cover 211 has a mounting portion 2112, and the mounting portion 2112 confines a mounting hole 2111. The electrode terminal 212 at least partially passes through the mounting hole 2111. The insulating member 213 includes a first insulating portion 2131, a second insulating portion 2132, and a third insulating portion 2133 connected sequentially, the second insulating portion 2132 is at least partially located in the mounting hole 2111, and the first insulating portion 2131 and the third insulating portion 2133 are separately located on two sides of the mounting portion 2112 in a thickness direction of the end cover 211 to cover the mounting portion 2112.

The end cover assembly 21 further includes a connector 214, the connector 214 is located on a side, away from the shell 23, of the end cover 211, the connector 214 is connected to the electrode terminal 212, and the connector 214 is used for outputting electrical energy of the battery cell 20. In the thickness direction, the first insulating portion 2131 is at least partially located between the connector 214 and the end cover 211 to insulate the connector 214 and the end cover 211. The electrode terminal 212 includes a main body 2121 and a limit portion 2122, the limit portion 2122 surrounds the main body 2121, and the main body 2121 is at least partially located inside the mounting hole 2111. In the thickness direction, the limit portion 2122 is opposite to the connecting portion 2113. The end cover assembly 21 further includes a first sealing member 215, and the first sealing member 215 is at least partially sealed between the connecting portion 2113 and the limit portion 2122.

In the thickness direction, the first insulating portion 2131 is located on a side, facing the interior of the battery cell 20, of the end cover 211, and the first insulating portion 2131 is used for insulating the end cover 211 and the interior of the battery cell 20. The end cover assembly 21 further includes a second sealing member 216, and the second sealing member 216 is at least partially sealed between the electrode terminal 212 and the second insulating portion 2132.

The insulating member 213 of the end cover assembly 21 extends into the mounting hole 2111 from one side of the mounting portion 2112 in the thickness direction of the end cover 211 and extends out of the mounting hole 2111 from the other side of the mounting portion 2112 in the thickness direction of the end cover 211 to cover the mounting portion 2112, and the second insulating portion 2132 covers the inner wall of the mounting hole 2111, so that the inner wall of the mounting hole 2111 is insulated from the electrode terminal 212 to avoid a short circuit caused by contact between electrode terminal 212 and the inner wall of mounting hole 2111, and problems of fire or explosion accidents occurring in a battery cell 20 are alleviated to some extent.

The connector 214 is connected to the electrode terminal 212 to limit the electrode terminal 212, and the connector 214 can abut against the first insulating portion 2131 to prevent the electrode terminal 212 from detaching from the mounting hole 2111 away from the connector 214 in the thickness direction. On the other hand, the connector 214 can conveniently output the electrical energy of the battery cell 20. The first insulating portion 2131 is at least partially located between the connector 214 and the end cover 211, which can insulate the connector 214 and the end cover 211 to avoid a short circuit caused by contact between the connector 214 and the end cover 211, so as to alleviate the problems of fire or explosion accidents in the battery cell 20 to some extent. The main body 2121 passes through the mounting hole 2111, the limit portion 2122 is connected to the main body 2121, and the limit portion 2122 can abut against the first sealing member 215 to limit the main body 2121 from detaching from the mounting hole 2111 towards the connector 214 in the thickness direction. The small gap between the third insulating portion 2133 and the connecting portion 2113 may cause the electrolytic solution to seep out of the battery cell 20 or other impurities to seep into the battery cell 20. Therefore, the first sealing member 215 is at least partially sealed between the connecting portion 2113 and the limit portion 2122 to seal the connecting portion 2113 and the limit portion 2122. While the connecting portion 2113 and the limit portion 2122 are sealed, the third insulating portion 2133 and the connecting portion 2113 are also sealed to reduce the risk of leakage of the electrolytic solution from the battery cell 20 or entry of other impurities into the battery cell 20.

The first insulating portion 2131 is disposed on the side, facing the interior of the battery cell 20, of the end cover 211, which can insulate the end cover 211 and the components inside the battery cell 20 to avoid a short circuit caused by contact between the end cover 211 and the components inside the battery cell 20, so as to alleviate the problems of fire or explosion accidents in the battery cell 20 to some extent. The gap between the electrode terminal 212 and the second insulating portion 2132 may cause the electrolytic solution to seep out of the battery cell 20 or other impurities to seep into the battery cell 20. Therefore, the second sealing member 216 is at least partially sealed between the electrode terminal 212 and the second insulating portion 2132, which can seal the electrode terminal 212 and the second insulating portion 2132, thereby reducing the risk of leakage of the electrolytic solution from the battery cell 20 or entry of other impurities into the battery cell 20.

Described above are merely preferred embodiments of the present application, and the present application is not limited thereto. The present invention is defined by the claims.

## Claims

1. An end cover assembly (21), applicable for a battery cell (20), the battery cell (20) comprising a shell (23), wherein the end cover assembly (21) comprises:
an end cover (211), configured for closing an opening of the shell (23), wherein the end cover (211) has a mounting portion (2112) that confines a mounting hole (2111);
an electrode terminal (212), at least partially passing through the mounting hole (2111);
an insulating member (213), comprising a first insulating portion (2131), a second insulating portion (2132), and a third insulating portion (2133) connected sequentially, wherein the second insulating portion (2132) is at least partially located in the mounting hole (2111), and the first insulating portion (2131) and the third insulating portion (2133) are separately located on two sides of the mounting portion (2112) in a thickness direction of the end cover (211) to cover the mounting portion (2112);
a connector (214), located on a side, away from the shell (23), of the end cover (211), wherein the connector (214) is connected to the electrode terminal (212), the connector (214) is configured for outputting electrical energy of the battery cell (20); and
a first sealing member (215),
wherein
in the thickness direction, the first insulating portion (2131) is at least partially located between the connector (214) and the end cover (211) to insulate the connector (214) and the end cover (211);
the end cover (211) further comprises a connecting portion (2113), the connecting portion (2113) surrounds the mounting portion (2112), the connecting portion (2113) and the mounting portion (2112) jointly confine an accommodating gap (2114), and the third insulating portion (2133) is at least partially accommodated in the accommodating gap (2114);
the electrode terminal (212) comprises a main body (2121) and a limit portion (2122), the limit portion (2122) surrounds the main body (2121), the main body (2121) is at least partially located in the mounting hole (2111), and in the thickness direction, the limit portion (2122) is opposite to the connecting portion (2113); and
the first sealing member (215) is at least partially sealed between the connecting portion (2113) and the limit portion (2122);
**characterized in that**
the first sealing member (215) comprises a first sealing portion (2151) and a second sealing portion (2152), the first sealing portion (2151) is sealed between the connecting portion (2113) and the limit portion (2122), and the second sealing portion (2152) is sealed between the main body (2121) and the second insulating portion (2132); and
the second sealing portion (2152) abuts against the connector (214).

2. The end cover assembly (21) according to claim 1, wherein the connecting portion (2113) has a first surface away from the connector (214), and the third insulating portion (2133) does not protrude from the first surface in a direction away from the connector (214).

3. The end cover assembly (21) according to claim 2, wherein in the thickness direction, the third insulating portion (2133) has a second surface away from the connector (214), and the second surface is flush with the first surface.

4. The end cover assembly (21) according to any one of claims 1 to 3, wherein the first sealing member (215) comprises a sealant, a sealing gasket, or a sealing sheet.

5. The end cover assembly (21) according to any one of claims 1 to 4, wherein the second sealing portion (2152) comprises a cylindrical structure, wherein the second sealing portion (2152) is sleeved on an outer side of the main body (2121).

6. The end cover assembly (21) according to claim 5, wherein the first sealing portion (2151) comprises a circular structure, wherein the first sealing portion (2151) is connected to an outer circumference of the second sealing portion (2152), and the first sealing portion (2151) and the second sealing portion (2152) form a flange shape as a whole.

7. The end cover assembly (21) according to any one of claims 1 to 6, wherein the end cover assembly (21) further comprises a second sealing member (216), and the second sealing member (216) is at least partially sealed between the electrode terminal (212) and the second insulating portion (2132).

8. The end cover assembly (21) according to claim 7, wherein the second sealing member (216) comprises a third sealing portion (2161) and a fourth sealing portion (2162), the third sealing portion (2161) is sealed between the electrode terminal (212) and the second insulating portion (2132), and the fourth sealing portion (2162) is sealed between the connector (214) and the connecting portion (2113).

9. A battery cell (20), comprising:
an electrode assembly (22);
a shell (23), having an accommodating space with an opening at one end for accommodating the electrode assembly (22); and
the end cover assembly (21) according to any one of claims 1 to 8, wherein the end cover (211) is connected to the shell (23) and closes the opening, and the electrode terminal (212) is electrically connected to the electrode assembly (22).

10. A battery (100), comprising:
a box (10); and
the battery cell (20) according to claim 9, wherein the battery cell (20) is accommodated in the box (10).

11. An electrical device, comprising the battery (100) according to claim 10.

## Patentansprüche

1. Stirnabdeckungsanordnung (21), die für eine Batteriezelle (20) anwendbar ist, wobei die Batteriezelle (20) ein Gehäuse (23) umfasst und die Stirnabdeckungsanordnung (21) Folgendes umfasst:
eine Stirnabdeckung (211), die konfiguriert ist zum Schließen einer Öffnung des Gehäuses (23), wobei die Stirnabdeckung (211) einen Befestigungsabschnitt (2112) aufweist, der ein Befestigungsloch (2111) einschließt;
einen Elektrodenanschluss (212), der mindestens teilweise durch das Befestigungsloch (2111) verläuft;
ein Isolationselement (213), das einen ersten Isolationsabschnitt (2131), einen zweiten Isolationsabschnitt (2132) und einen dritten Isolationsabschnitt (2133) umfasst, die sequenziell verbunden sind, wobei der zweite Isolationsabschnitt (2132) sich mindestens teilweise im Befestigungsloch (2111) befindet und der erste Isolationsabschnitt (2131) und der dritte Isolationsabschnitt (2133) sich in einer Dickenrichtung der Stirnabdeckung (211) getrennt auf zwei Seiten des Befestigungsabschnitts (2112) befinden, um den Befestigungsabschnitt (2112) abzudecken;
einen Verbinder (214), der sich auf einer Seite der Stirnabdeckung (211), die vom Gehäuse (23) abgewandt ist, befindet, wobei der Verbinder (214) mit dem Elektrodenanschluss (212) verbunden ist und der Verbinder (214) zum Ausgeben elektrischer Energie der Batteriezelle (20) konfiguriert ist; und
ein erstes Dichtungselement (215), wobei
der erste Isolationsabschnitt (2131) sich in der Dickenrichtung mindestens teilweise zwischen dem Verbinder (214) und der Stirnabdeckung (211) befindet, um den Verbinder (214) und die Stirnabdeckung (211) zu isolieren;
die Stirnabdeckung (211) ferner einen Verbindungsabschnitt (2113) umfasst, der Verbindungsabschnitt (2113) den Befestigungsabschnitt (2112) umgibt, der Verbindungsabschnitt (2113) und der Befestigungsabschnitt (2112) eine Aufnahmelücke (2114) gemeinsam einschließen und der dritte Isolationsabschnitt (2133) in die Aufnahmelücke (2114) mindestens teilweise aufgenommen ist;
der Elektrodenanschluss (212) einen Hauptkörper (2121) und einen Begrenzungsabschnitt (2122) umfasst, der Begrenzungsabschnitt (2122) den Hauptkörper (2121) umgibt, der Hauptkörper (2121) sich mindestens teilweise im Befestigungsloch (2111) befindet und in der Dickenrichtung der Begrenzungsabschnitt (2122) dem Verbindungsabschnitt (2113) gegenüberliegt; und
das erste Dichtungselement (215) zwischen dem Verbindungsabschnitt (2113) und dem Begrenzungsabschnitt (2122) mindestens teilweise versiegelt ist;
**dadurch gekennzeichnet, dass** das erste Dichtungselement (215) einen ersten Dichtungsabschnitt (2151) und einen zweiten Dichtungsabschnitt (2152) umfasst, der erste Dichtungsabschnitt (2151) zwischen dem Verbindungsabschnitt (2113) und dem Begrenzungsabschnitt (2122) versiegelt ist und der zweite Dichtungsabschnitt (2152) zwischen dem Hauptkörper (2121) und dem zweiten Isolationsabschnitt (2132) versiegelt ist; und
der zweite Dichtungsabschnitt (2152) am Verbinder (214) anliegt.

2. Stirnabdeckungsanordnung (21) nach Anspruch 1, wobei der Verbindungsabschnitt (2113) eine erste Oberfläche aufweist, die vom Verbinder (214) abgewandt ist, und der dritte Isolationsabschnitt (2133) von der ersten Oberfläche in einer Richtung, die vom Verbinder (214) abgewandt ist, nicht vorsteht.

3. Stirnabdeckungsanordnung (21) nach Anspruch 2, wobei in der Dickenrichtung der dritte Isolationsabschnitt (2133) eine zweite Oberfläche aufweist, die vom Verbinder (214) abgewandt ist, und die zweite Oberfläche mit der ersten Oberfläche bündig ist.

4. Stirnabdeckungsanordnung (21) nach einem der Ansprüche 1 bis 3, wobei das erste Dichtungselement (215) ein Dichtungsmittel, eine Dichtung oder eine Dichtungsfolie umfasst.

5. Stirnabdeckungsanordnung (21) nach einem der Ansprüche 1 bis 4, wobei der zweite Dichtungsabschnitt (2152) eine zylindrische Struktur umfasst und der zweite Dichtungsabschnitt (2152) zur Ummantelung auf einer Außenseite des Hauptkörpers (2121) verwendet wird.

6. Stirnabdeckungsanordnung (21) nach Anspruch 5, wobei der erste Dichtungsabschnitt (2151) eine kreisförmige Struktur umfasst, in der der erste Dichtungsabschnitt (2151) mit einem Außenumfang des zweiten Dichtungsabschnitts (2152) verbunden ist und der erste Dichtungsabschnitt (2151) und der zweite Dichtungsabschnitt (2152) als Ganzes eine Flanschform bilden.

7. Stirnabdeckungsanordnung (21) nach einem der Ansprüche 1 bis 6, wobei die Stirnabdeckungsanordnung (21) ferner ein zweites Dichtungselement (216) umfasst und das zweite Dichtungselement (216) mindestens teilweise zwischen dem Elektrodenanschluss (212) und dem zweiten Isolationsabschnitt (2132) versiegelt ist.

8. Stirnabdeckungsanordnung (21) nach Anspruch 7, wobei das zweite Dichtungselement (216) einen dritten Dichtungsabschnitt (2161) und einen vierten Dichtungsabschnitt (2162) umfasst, der dritte Dichtungsabschnitt (2161) zwischen dem Elektrodenanschluss (212) und dem zweiten Isolationsabschnitt (2132) versiegelt ist und der vierte Dichtungsabschnitt (2162) zwischen dem Verbinder (214) und dem Verbindungsabschnitt (2113) versiegelt ist.

9. Batteriezelle (20), die Folgendes umfasst:
eine Elektrodenanordnung (22);
ein Gehäuse (23), das einen Aufnahmeraum mit einer Öffnung bei einem Ende zum Aufnehmen der Elektrodenanordnung (22) aufweist; und
die Stirnabdeckungsanordnung (21) nach einem der Ansprüche 1 bis 8, wobei die Stirnabdeckung (211) mit dem Gehäuse (23) verbunden ist und die Öffnung schließt und der Elektrodenanschluss (212) mit der Elektrodenanordnung (22) elektrisch verbunden ist.

10. Batterie (100), die Folgendes umfasst:
einen Kasten (10) und
die Batteriezelle (20) nach Anspruch 9, wobei die Batteriezelle (20) in den Kasten (10) aufgenommen ist.

11. Elektrische Vorrichtung, die die Batterie (100) nach Anspruch 10 umfasst.

## Revendications

1. Ensemble (21) de couvercle d'extrémité, applicable à une cellule (20) de batterie, la cellule (20) de batterie comprenant une enveloppe (23), l'ensemble (21) de couvercle d'extrémité comprenant :
un couvercle d'extrémité (211), configuré pour fermer une ouverture de l'enveloppe (23), le couvercle d'extrémité (211) présentant une portion de montage (2112) qui délimite un trou de montage (2111) ;
une borne d'électrode (212), passant au moins partiellement à travers le trou de montage (2111) ;
un élément isolant (213), comprenant une première portion isolante (2131), une deuxième portion isolante (2132), et une troisième portion isolante (2133) connectées séquentiellement, la deuxième portion isolante (2132) étant située au moins partiellement dans le trou de montage (2111), et la première portion isolante (2131) et la troisième portion isolante (2133) étant situées séparément de part et d'autre de la portion de montage (2112) dans une direction d'épaisseur du couvercle d'extrémité (211) de manière à recouvrir la portion de montage (2112) ;
un connecteur (214), situé sur un côté, éloigné de l'enveloppe (23), du couvercle d'extrémité (211), le connecteur (214) étant connecté à la borne d'électrode (212), le connecteur (214) étant configuré pour délivrer de l'énergie électrique de la cellule (20) de batterie ; et
un premier élément d'étanchéité (215),
dans la direction d'épaisseur, la première portion isolante (2131) étant située au moins partiellement entre le connecteur (214) et le couvercle d'extrémité (211) afin d'isoler le connecteur (214) et le couvercle d'extrémité (211) ;
le couvercle d'extrémité (211) comprenant en outre une portion de connexion (2113), la portion de connexion (2113) entourant la portion de montage (2112), la portion de connexion (2113) et la portion de montage (2112) délimitant conjointement un espace de logement (2114), et la troisième portion isolante (2133) étant logée au moins partiellement dans l'espace de logement (2114) ;
la borne d'électrode (212) comprenant un corps principal (2121) et une portion de limitation (2122), la portion de limitation (2122) entourant le corps principal (2121), le corps principal (2121) étant situé au moins partiellement dans le trou de montage (2111) et, dans la direction d'épaisseur, la portion de limitation (2122) étant en regard de la portion de connexion (2113) ; et
le premier élément d'étanchéité (215) étant au moins partiellement disposé à étanchéité entre la portion de connexion (2113) et la portion de limitation (2122) ;
**caractérisé en ce que**
le premier élément d'étanchéité (215) comprend une première portion d'étanchéité (2151) et une deuxième portion d'étanchéité (2152), la première portion d'étanchéité (2151) est disposée à étanchéité entre la portion de connexion (2113) et la portion de limitation (2122), et la deuxième portion d'étanchéité (2152) est disposée à étanchéité entre le corps principal (2121) et la deuxième portion isolante (2132) ; et
la deuxième portion d'étanchéité (2152) est en appui contre le connecteur (214).

2. Ensemble (21) de couvercle d'extrémité selon la revendication 1, dans lequel la portion de connexion (2113) présente une première surface éloignée du connecteur (214), et la troisième portion isolante (2133) ne fait pas saillie de la première surface dans une direction s'éloignant du connecteur (214).

3. Ensemble (21) de couvercle d'extrémité selon la revendication 2, dans lequel, dans la direction d'épaisseur, la troisième portion isolante (2133) présente une deuxième surface éloignée du connecteur (214), et la deuxième surface est affleurante avec la première surface.

4. Ensemble (21) de couvercle d'extrémité selon l'une quelconque des revendications 1 à 3, dans lequel le premier élément d'étanchéité (215) comprenant un produit d'étanchéité, une garniture d'étanchéité, ou une feuille d'étanchéité.

5. Ensemble (21) de couvercle d'extrémité selon l'une quelconque des revendications 1 à 4, dans lequel la deuxième portion d'étanchéité (2152) comprend une structure cylindrique, la deuxième portion d'étanchéité (2152) étant emmanchée sur un côté extérieur du corps principal (2121).

6. Ensemble (21) de couvercle d'extrémité selon la revendication 5, dans lequel la première portion d'étanchéité (2151) comprend une structure circulaire, la première portion d'étanchéité (2151) étant connectée à une circonférence extérieure de la deuxième portion d'étanchéité (2152), et la première portion d'étanchéité (2151) et la deuxième portion d'étanchéité (2152) prennent, dans leur ensemble, la forme d'une bride.

7. Ensemble (21) de couvercle d'extrémité selon l'une quelconque des revendications 1 à 6, l'ensemble (21) de couvercle d'extrémité comprenant en outre un deuxième élément d'étanchéité (216), et le deuxième élément d'étanchéité (216) étant au moins partiellement disposé à étanchéité entre la borne d'électrode (212) et la deuxième portion isolante (2132).

8. Ensemble (21) de couvercle d'extrémité selon la revendication 7, dans lequel le deuxième élément d'étanchéité (216) comprend une troisième portion d'étanchéité (2161) et une quatrième portion d'étanchéité (2162), la troisième portion d'étanchéité (2161) est disposée à étanchéité entre la borne d'électrode (212) et la deuxième portion isolante (2132), et la quatrième portion d'étanchéité (2162) est disposée à étanchéité entre le connecteur (214) et la portion de connexion (2113).

9. Cellule (20) de batterie, comprenant :
un assemblage d'électrodes (22) ;
une enveloppe (23), présentant un espace de logement avec une ouverture à une extrémité pour loger l'assemblage d'électrodes (22) ; et
l'ensemble (21) de couvercle d'extrémité selon l'une quelconque des revendications 1 à 8, le couvercle d'extrémité (211) étant connecté à l'enveloppe (23) et fermant l'ouverture, et la borne d'électrode (212) étant électriquement connectée à l'assemblage d'électrodes (22).

10. Batterie (100), comprenant :
un caisson (10) ; et
la cellule (20) de batterie selon la revendication 9, la cellule (20) de batterie étant logée dans le caisson (10).

11. Dispositif électrique, comprenant la batterie (100) selon la revendication 10.
